# EUROPEAN PATENT SPECIFICATION

(11) **EP 0 694 047 B1**
(45) Date of publication and mention of the grant of the patent: **18.07.2001**
(21) Application number: 94912522.3
(22) Date of filing: 23.03.1994
(51) Int. Cl.: C08G 18/48, C08G 18/63, C08G 18/40, C08G 18/22, C08G 18/76, C08G 18/79

(54) **POLYURETHANE FOAMS**
POLYURETHAN-SCHAUMSTOFFE
MOUSSES POLYURETHANE

(30) Priority: 13.04.1993 GB 9307565
(43) Date of publication of application: 31.01.1996
(73) Proprietor: HUNTSMAN INTERNATIONAL LLC, Salt Lake City, Utah 84108 (US)
(72) Inventor: BLEYS, Gerhard, Jozef, B-3001 Heverlee (BE); NEYENS, Viviane, Gertrude, Johanna, B-3270 Scherpenheuvel (BE)
(74) Representative: Baken, Philippus Johannes L. H.
(86) International application number: EP9400927
(87) International publication number: WO9424183

(56) References cited:
- EP-A- 0 557 792
- WO-A-91/14726
- DE-A- 1 941 030
- FR-A- 2 281 944
- GB-A- 2 022 113
- US-A- 4 098 732

## Description

The manufacture of polyurethane flexible foams by reacting organic polyisocyanates such as tolylene diisocyanate (TDI) or diphenylmethane diisocyanate (MDI) with polyether polyols in conjunction with a foaming agent is well established. The polyethers are usually polyoxypropylene polyols derived from propylene oxide or poly(oxypropylene-oxyethylene) polyols derived from various combinations of propylene and ethylene oxides. Ethylene oxide tipped polyoxypropylene polyols wherein the oxyethylene groups constitute a minor proportion of the total oxyalkylene residues are particularly important because of their enhanced reactivity towards isocyanates.

Polyols having higher oxyethylene contents, for example 50% or more on a weight basis, are often employed as minor additives to ensure that the foams have an open-cell structure.

It has now been found that flexible foams having valuable properties can be made from formulations containing polyol compositions having medium oxyethylene contents if substantially pure 4,4'-MDI or a liquid derivative thereof is employed as the polyisocyanate.

Thus according to the invention, there is provided a method for the preparation of flexible polyurethane foams having a free rise density of from 15 to 100 kg/m³ by reacting a polyisocyanate containing at least 85%, preferably at least 90% and more preferably at least 95% by weight of 4,4'-diphenylmethane diisocyanate or a liquid variant thereof, obtained by introducing uretonimine and/or carbodiimide groups into said polyisocyanate and/or by reacting said polyisocyanate with one or more polyols, with a polyol composition comprising at least one poly(oxyethylene-oxyalkylene) polyol, the composition having an average nominal hydroxyl functionality of from 2.5 to 6, preferably 2.5 to 3, a number average hydroxyl equivalent weight of from 1000 to 3000 and an average oxyethylene content of from 25 to less than 50, preferably 40 to less than 50% by weight and with water. Further the present invention is concerned with a prepolymer having an NCO value of 5-30% by weight which is the reaction product obtained by reacting an excessive amount of said polyisocyanate with said polyol composition.

WO 91/14726 is concerned with the preparation of - optionally foamed - elastomeric polymers. If foamed the density is 200 -700 kg/m3. Further WO 91/14726 does not provide any explicit or implicit suggestion to prepare good quality, resilient flexible foams. The prepolymers used are based on polyoxypropylene glycol.

US 4098732 is related to flexible foams, and more in particular to flame resistant and smoke-retardant foams. In US 4098732 the polyisocyanate preferably is tolylene diisocyanate; the special polyols of the present case have not been mentioned and Tg and resilience have not been referred to at all.

The polyisocyanate component used in the method of the invention may consist essentially of pure 4,4'-diphenylmethane diisocyanate or mixtures of this diisocyanate with one or more other organic polyisocyanates, especially other diphenylmethane diisocyanate isomers, for example the 2,4'-isomer optionally in conjunction with the 2,2'-isomer. The polyisocyanate component may also be an MDI variant derived from a polyisocyanate composition containing at least 85% by weight of 4,4'-diphenylmethane diisocyanate. MDI variants are well known in the art and, for use in accordance with the invention, are liquid (at ambient conditions) products obtained by introducing uretonimine and/or carbodiimide groups into said polyisocyanate composition (e.g. comprising up to 30% by weight of uretonimine- and/or carbodiimide modified 4,4'-MDI) and/or by reacting such a composition with one or more polyols.

The polyols in the polyol composition are known in the art and may be obtained in conventional manner by reacting ethylene oxide and another alkylene oxide, preferably propylene oxide, simultaneously and/or sequentially in any order with an initiator such as water, a polyol, a hydroxylamine, a polyamine and the like having from 2 to 6, preferably 2 to 3, active hydrogen atoms. Preferred initiators are ethylene glycol, diethylene glycol, propylene glycol, dipropylene glycol, glycerol, trimethylol propane, ethanolamine, diethanolamine and triethanolamine.

Alternatively, the polyol composition may comprise a mixture of two or more polyoxyalkylene polyols such that the total composition has the required average functionality, equivalent weight and oxyethylene content. The polyoxyalkylene polyols present in such mixtures are preferably poly(oxyethylene-oxypropylene) polyols but one or more polyoxyethylene polyols and/or polyoxypropylene polyols may also be present.

Preferred polyol compositions - in as far as polyether polyols having a number average hydroxyl equivalent weight of from 1000 to 3000 are concerned - consist of :
(a) from 50 to 100% by weight of a polyoxyalkylene polyol containing oxyethylene residues, said polyol component having an average nominal hydroxyl functionality of from 2 to 6, preferably 2 to 3, a number average hydroxyl equivalent weight of from 1000 to 3000 and an average oxyethylene content of from 25 to less than 50% by weight, and
(b) from 50 to 0% by weight of one or more other polyols having an average nominal functionality of from 2 to 6, preferably 2 to 3, a number average equivalent weight of 1000 to 3000 and an oxyethylene content of less than 25% by weight, preferably 10 to less than 25% by weight or 50% or more, preferably 50-85% by weight; the polyol composition having the hydroxyl functionality, the equivalent weight and the oxyethylene content described before.

The term "average nominal hydroxyl functionality" is used herein to indicate the average functionality (number of hydroxyl groups per molecule) of the polyol composition on the assumption that the average functionality of the polyoxyalkylene polyols present therein is identical with the average functionality (number of active hydrogen atoms per molecule) of the initiator(s) used in their preparation although in practice it will often be somewhat less because of some terminal unsaturation.

If desired, the polyol composition may contain dispersed polymer particles.

Such polymer-modified polyols have been fully described in the prior art and include products obtained by the in situ polymerisation of one or more vinyl monomers, for example acrylonitrile and styrene, in polyoxyalkylene polyols or by the in situ reaction between a polyisocyanate and an amino- or hydroxyfunctional compound, for example triethanolamine, in a polyoxyalkylene polyol.

The preferred foaming agent for use in the method of the invention is water, optionally in conjunction with a physical blowing agent, for example a low boiling organo fluoro compound. The amount of foaming agent may be varied in known manner in order to achieve the desired foam density, suitable amounts of water being, for example, from 0.25 to 20% by weight, preferably 2-15% by weight, based on the weight of polyol composition. Preferably water is the only foaming agent. The isocyanate index of the reaction system, taking account of the polyol composition, water and any other isocyanate-reactive species, for example chain extenders or cross-linking agents, may be as low as 10 or as high as 120 and preferably is 40 to 110. The free rise density of the flexible foams may range from 15 to 100 kg/m³, preferably from 20 to 80 kg/m³.

The foam-forming reaction mixture may contain one or more of the additives used for making flexible foam. Such additives include catalysts, for example tertiary amines, tin compounds and preferably alkali or earth alkaline metal carboxylates in particular potassium carboxylates, surface-active agents and foam stabilisers, for example siloxane-oxyalkylene copolymers, chain extenders, for example low molecular weight diols like glycol, butanediol, diethylene glycol and polyethyleneglycol, having a molecular weight of 200-1000, cross-linking agents, for example glycerol, trimethylolpropane, diethanolamine and triethanolamine, flame retardants, organic and inorganic fillers, pigments,agents for suppressing the so-called boiling-foam effect like poly-dimethylsiloxanes and internal mould release agents. The chain extenders and/or cross-linkers are preferably used in an amount of 2 parts by weight or less and most preferably 1 part by weight or less per 100 parts by weight of polyether polyols having a number average hydroxyl equivalent weight of 1000 to 3000.

The preferred carboxylate catalysts may be selected from aliphatic carboxylates having 1-10 carbon atoms like acetate, hexanoate, 2-ethylhexanoate and octanoate.

Further the carboxylate may be selected from those having the formula R-E-A-COO⁻ wherein
A is a hydrocarbon diradical having 1-6 preferably 1-3 carbon atoms;
E is -O- or 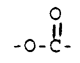 and
R is X-R₁-(OR₂)ₙ- wherein X is CH₃- or OH-, R₁ is a hydrocarbon diradical having 1-8 and preferably 1-4 carbon atoms, R₂ is a diradical having 2-4 and preferably 2 or 3 carbon atoms and n is 0 to 10, preferably 0-5.
   Some of such catalysts and their preparation are known as such, see EP 294161 and EP 220697.

A may be selected from diradicals like -CH₂-, -CH₂CH₂-, -CH₂CH₂CH₂-, -CH=CH-CH₂-, 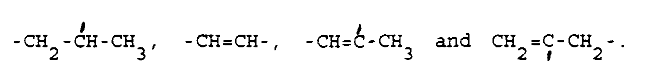 The most preferred diradical is -CH=CH-.

R₁ may be selected from those hydrocarbon diradicals mentioned for A and from radicals obtained by removing two hydrogen atoms from e.g. butane, pentane, hexane and octane. The most preferred radicals for R₁ are methylene, ethylene, trimethylene, tetramethylene and propylene.

R₂ may be selected from ethylene, trimethylene, tetramethylene, ethylethylene and propylene. Most preferred groups are ethylene and propylene.

Examples of catalysts are sodium acetate, potassium acetate, potassium hexanoate, potassium 2-ethylhexanoate, potassium ethoxyacetate, sodium ethoxyacetate, the potassium salt of the hemi-ester of maleic acid and ethoxyethane, ethoxyethoxyethane, ethylene glycol, diethylene glycol, triethylene glycol, tetraethylene glycol, propylene glycol, dipropylene glycol, tripropylene glycol, methanol, ethanol, propanol or butanol and the potassium salt of the hemi-ester of such hydroxy containing compounds with malonic, succinic, glutaric, adipic or fumaric acid.

By using this special class of catalysts instead of conventional tertiary amine-containing catalysts the foams show a reduced chance of discoloration due to side reactions with additives like antioxidants, give less rise to unpleasant smell, are easier recyclable and give less rise to the occurence of fogging.

The amount of carboxylate salt used is in the range of 0.1 to 5, preferably 0.2-3 parts by weight per 100 parts by weight of reactants.

In operating the method of the invention, the known one-shot, semi-prepolymer and full prepolymer techniques may be used together with conventional mixing equipment and the foams may be produced in the form of slabstock, mouldings and the like.
Prepolymers having an NCO value of 5-30% by weight which are the reaction product of the above polyisocyanates (in excess) and polyols also form part of the invention. The preparation of prepolymers as such is generally known in the art.
Foams made by the method of the invention have valuable energy-absorbing properties making them useful for acoustic vibration damping as well as for seating purposes. The foams show a lower Tg than foams prepared from polyols having a higher oxyethylene content; the foams according to the invention show a low density with an improved resilience while retaining most of the good properties of such foams prepared from polyols having a higher oxyethylene content, like tear strength, elongation at break and compression set.
Further the foams according to the invention have open cells or easily crushable cells.

The invention is illustrated but not limited by the following Examples in which all parts, percentages and ratios are by weight.

The following glossary of materials is included to identify reaction components not otherwise identified in the Examples.

### Glossary

- Polyol 1 :: an EO/PO polyol having a nominal functionality of 3, an OH value of 38.5 mg KOH/g, an EO content of 59% by weight and an EO-tip content of 19% by weight.
- Polyol 2 :: an EO/PO polyol having a nominal functionality of 3, an OH value of 36 mg KOH/g, an EO content of 39% by weight and an EO-tip content of 10% by weight.
- Polyol 3 :: an EO/PO polyol having a nominal functionality of 3, an OH value of 26 mg KOH/g, an EO content of 29% by weight and an EO-tip content of 15% by weight.

Dabco EG is a 33% solution of Dabco in ethylene glycol, obtainable from Air Products. Dabco is a trade mark of Air Products.

Polyisocyanate : an MDI comprising 1.8% by weight of 2,2' + 2,4'-MDI, 84.6% by weight of 4,4'-MDI and 13.6% by weight of uretonimine modified 4,4'-MDI and having an NCO content of 31.4% by weight.

DBDTL is dibutyltin dilaurate.
- A1 is Niax A1 :: a catalyst obtainable from Union Carbide. Nias ix a trademark of Union Carbide.
- DELA :: diethanolamine.
- Dabco EG :: a catalyst from Air Products.

The polyisocyanate was reacted in a foam-cup at a certain index, indicated in Table 1, with an isocyanate-reactive composition details of which are also given in Table 1 together with some physical properties. All amounts are in parts by weight.

**TABLE 1**

| | | | | |
|---|---|---|---|---|
| Index | 100 | 97 | 96 | 102 |
| Polyol 1 | 50 | 20 | - | - |
| Polyol 2 | 50 | 80 | 100 | - |
| Polyol 3 | - | - | - | 100 |
| Water | 3 | 3 | 3 | 3 |
| Dabco EG | 0.4 | 0.4 | 0.4 | 0.4 |
| DBTDL | 0.1 | 0.15 | 0.15 | 0.15 |
| Niax A1 | 0.15 | 0.15 | 0.15 | 0.15 |
| DELA | - | 0.7 | 0.9 | 1 |
| Free rise density, Kg/m³ | 38 | 39 | 41 | 36 |
| Resilience, % (Iso 8307) | 48 | 36 | 39 | 44 |
| Glass transition temperature, °C (Dynamic Mechanical Thermal Analysis, DMT Analyser MKII of Polymer Laboratories Ltd) | -24 | - | -25 | -42 |

## Claims

1. A method for the preparation of flexible polyurethane foams having a free rise density of from 15 to 100 kg/m³ by reacting a polyisocyanate containing at least 85% by weight of 4,4'-diphenylmethane diisocyanate or a liquid variant thereof, obtained by introducing uretonimine and/or carbodiimide groups into said polyisocyanate and/or by reacting said polyisocyanate with one or more polyols, with a polyol composition comprising at least one poly(oxyethylene-oxyalkylene) polyol, the composition having an average nominal hydroxyl functionality of from 2.5 to 6, a number average hydroxyl equivalent weight of from 1000 to 3000 and an average oxyethylene content of from 25 to less than 50% by weight and with water.

2. A method according to claim 1 wherein the poly(oxyethylene-oxyalkylene) polyol is a poly(oxyethylene-oxypropylene) polyol.

3. A method according to claims 1 and 2 wherein the polyol composition has an average nominal hydroxyl functionality of from 2.5 to 3.

4. A method according to claims 1-3 wherein the polyisocyanate contains at least 90% by weight of 4,4'-diphenylmethane diisocyanate or a liquid variant thereof.

5. A method according to claims 1-4 wherein the polyisocyanate contains at least 95% by weight of 4,4'-diphenylmethane diisocyanate or a liquid variant thereof.

6. A method according to claims 1-5 wherein the polyol composition comprises
(a) from 50 to 100% by weight of a polyoxyalkylene polyol containing oxyethylene residues, said polyol component having an average nominal hydroxyl functionality of from 2 to 6, a number average hydroxyl equivalent weight of from 1000 to 3000 and an average oxyethylene content of from 25 to less than 50% by weight, and
(b) from 50 to 0% by weight of one or more other polyols having an average nominal functionality of from 2 to 6, preferably 2 to 3, a number average equivalent weight of 1000 to 3000 and an oxyethylene content of less than 25% by weight, or 50% or more.

7. A method according to claims 1-6 wherein a catalytic effective amount of a salt of an alkali metal or earth alkaline metal and a carboxylic acid is employed.

8. A method according to claims 1-7 wherein the composition has an ethylene oxide content of 40 to less than 50% by weight.

9. A method according to claims 1-8 wherein water is the only blowing agent in an amount of 2-15% by weight, based on the weight of the polyol composition.

10. A prepolymer having an NCO value of 5-30% by weight which is the reaction product obtained by reacting an excessive amount of a polyisocyanate containing at least 85% by weight of 4,4'-diphenylmethane diisocyanate or a liquid variant thereof, obtained by introducing uretonimine and/or carbodiimide groups into said polyisocyanate and/or by reacting said polyisocyanate with one or more polyols, with a polyol composition comprising at least one poly(oxyethylene-oxyalkylene) polyol, the composition having an average nominal hydroxyl functionality of from 2.5 to 6, a number average hydroxyl equivalent weight of from 1000 to 3000, and an average oxyethylene content of from 25 to less than 50% by weight.

## Patentansprüche

1. Verfahren zur Herstellung von Polyurethan-Weichschaumstoffen mit einer Schüttdichte von 15 bis 100 kg/m³ durch Umsetzung eines Polyisocyanats, das wenigstens 85 Gew.-% 4,4'-Diphenylmethandiisocyanat oder eine flüssige, durch Einführung von Uretonimin- und/oder Carbodiimidgruppen in das Polyisocyanat und/oder durch Umsetzung des Polyisocyanats mit einem oder mehr Polyolen gewonnene Variante hiervon enthält, mit einer wenigstens ein Poly(oxyethylen-oxyalkylen)polyol umfassenden Polyolzusammensetzung, wobei die Zusammensetzung eine durchschnittliche nominale Hydroxy-Funktionalität von 2,5 bis 6, eine durchschnittliche zahlenbezogene Hydroxy-Äquivalentmasse von 1.000 bis 3.000 und einen durchschnittlichen Oxyethylengehalt von 25 bis weniger als 50 Gew.-% besitzt, und mit Wasser.

2. Verfahren gemäß Anspruch 1, wobei das Poly(oxyethylen-oxyalkylen)polyol ein Poly(oxyethylenoxypropylen)polyol ist.

3. Verfahren gemäß den Ansprüchen 1 und 2, wobei die Polyolzusammensetzung eine durchschnittliche nominale Hydroxylfunktionalität von 2,5 bis 3 besitzt.

4. Verfahren gemäß den Ansprüchen 1-3, wobei das Polyisocyanat wenigstens 90 Gew.-% 4,4'-Diphenylmethandiisocyanat oder eine flüssige Variante hiervon enthält.

5. Verfahren gemäß den Ansprüchen 1-4, wobei das Polyisocyanat wenigstens 95 Gew.-% 4,4'-Diphenylmethandiisocyanat oder eine flüssige Variante hiervon enthält.

6. Verfahren gemäß den Ansprüchen 1-5, wobei die Polyolzusammensetzung umfasst
(a) 50 bis 100 Gew.-% eines Oxyethylenreste enthaltenden Polyoxyalkylenpolyols, wobei die Polyolkomponente eine durchschnittliche nominale Hydroxy-Funktionalität von 2 bis 6, eine durchschnittliche zahlenbezogene Hydroxy-Äquivalentmasse von 1.000 bis 3.000 und einen durchschnittlichen Oxyethylengehalt von 25 bis weniger als 50 Gew.-% besitzt, und
(b) 50 bis 0 Gew.-% eines oder mehr anderer Polyole mit einer durchschnittlichen nominalen Funktionalität von 2 bis 6, vorzugsweise 2 bis 3, einer durchschnittlichen zahlenbezogenen Äquivalentmasse von 1.000 bis 3.000 und einem Oxyethylengehalt von weniger als 25 Gew.-%, oder 50% oder mehr.

7. Verfahren gemäß den Ansprüchen 1-6, wobei eine katalytisch effektive Menge eines Salzes oder eines Alkalimetalls oder Erdalkalimetalls und einer Carbonsäure verwendet wird.

8. Verfahren gemäß den Ansprüchen 1-7, wobei die Zusammensetzung einen Ethylenoxidgehalt von 40 bis weniger als 50 Gew.-% besitzt.

9. Verfahren gemäß den Ansprüchen 1-8, wobei Wasser das einzige Treibmittel ist, in einer Menge von 2 bis 15 Gew.-%, basierend auf dem Gewicht der Polyolzusammensetzung.

10. Präpolymer mit einem NCO-Wert von 5 bis 30 Gew.-%, welches das Reaktionsprodukt ist, das gewonnen wurde durch Umsetzung eines Überschusses an Polyisocyanat, das wenigstens 85 Gew.-% 4,4'-Diphenylmethandiisocyanat oder eine flüssige, durch Einführung von Uretonimin- und/oder Carbodiimidgruppen in das Polyisocyanat und/oder durch Umsetzung des Polyisocyanats mit einem oder mehr Polyolen gewonnene Variante hiervon enthält, mit einer wenigstens ein Poly(oxyethylen-oxyalkylen)polyol umfassenden Polyolzusammensetzung, wobei die Zusammensetzung eine durchschnittliche zahlenbezogene Hydroxy-Funktionalität von 2,5 bis 6, eine durchschnittliche zahlenbezogene Hydroxy-Äquivalentmasse von 1.000 bis 3.000, und einen durchschnittlichen Oxyethylengehalt von 25 bis weniger als 50 Gew.-% besitzt.

## Revendications

1. Procédé pour la préparation de mousses flexibles de polyuréthanne, ayant une masse volumique par montée libre de 15 à 100 kg/m³, en faisant réagir un polyisocyanate contenant au moins 85 % en poids de 4,4'-diphénylméthane-diisocyanate ou d'un de ses variants liquides, obtenu en introduisant des groupes urétonimine et/ou carbodiimide dans ledit polyisocyanate et/ou en faisant réagir ledit polyisocyanate avec un ou plusieurs polyols, avec une composition de polyols comprenant au moins un poly(oxyéthylène-oxyalkylène)polyol, ladite composition ayant une fonctionnalité hydroxyle nominale moyenne de 2,5 à 6, une moyenne en nombre du poids équivalent d'hydroxyle de 1000 à 3000, et une teneur moyenne en résidus oxyéthylène de 25 à moins de 50 % en poids, et avec de l'eau.

2. Procédé suivant la revendication 1, dans lequel le poly(oxyéthylène-oxyalkylène) est un poly(oxyéthylène-oxypropylène)polyol.

3. Procédé suivant les revendications 1 et 2, dans lequel la composition de polyols a une fonctionnalité hydroxyle nominale de 2,5 à 3.

4. Procédé suivant les revendications 1 à 3, dans lequel le polyisocyanate contient au moins 90 % en poids de 4,4'-diphénylméthane-diisocyanate ou d'un de ses variants liquides.

5. Procédé suivant les revendications 1 à 4, dans lequel le polyisocyanate contient au moins 95 % en poids de 4,4'-diphénylméthane-diisocyanate ou d'un de ses variants liquides.

6. Procédé suivant les revendications 1 à 5, dans lequel la composition de polyols comprend :
(a) 50 à 100 % en poids d'un polyoxyalkylène-polyol contenant des résidus oxyéthylène, ledit polyol ayant une fonctionnalité hydroxyle nominale moyenne de 2 à 6, une moyenne en nombre du poids équivalent d'hydroxyle de 1000 à 3000, et une teneur moyenne en résidus oxyéthylène de 25 à moins de 50 % en poids, et
(b) 50 à 0 % en poids d'un ou plusieurs autres polyols ayant une fonctionnalité nominale moyenne de 2 à 6, de préférence de 2 à 3, une moyenne en nombre du poids équivalent d'hydroxyle, de 1000 à 3000, et une teneur en résidus oxyéthylène inférieure à 25 % en poids, ou bien égale ou supérieure à 50 % en poids.

7. Procédé suivant les revendications 1 à 6, dans lequel une quantité catalytiquement efficace d'un sel d'un métal alcalin ou alcalino-terreux et d'un acide carboxylique est utilisée.

8. Procédé suivant les revendications 1 à 7, dans lequel la composition a une teneur en oxyde d'éthylène de 40 à moins de 50 % en poids.

9. Procédé suivant les revendications 1 à 8, dans lequel l'eau est le seul agent porogène, en une quantité de 2 à 15 % en poids, sur la base du poids de la composition de polyols.

10. Prépolymère ayant une teneur en NCO de 5 à 30 % en poids, qui est le produit de réaction obtenu en faisant réagir un excès d'un polyisocyanate contenant au moins 85 % en poids de 4,4'-diphénylméthane-diisocyanate ou d'un des ses variants liquides, obtenu en introduisant des groupes urétonimine et/ou carbodiimide dans ledit polyisocyanate, et/ou en faisant réagir ledit polyisocyanate avec un ou plusieurs polyols, avec une composition de polyols comprenant au moins un poly(oxyéthylène-oxyalkylène)polyol, la composition ayant une fonctionnalité hydroxyle nominale moyenne de 2,5 à 6, une moyenne en nombre du poids équivalent d'hydroxyle de 1000 à 3000 et une teneur moyenne en oxyéthylène de 25 à moins de 50 % en poids.
